# EUROPÄISCHE PATENTSCHRIFT

(11) **EP 2 625 700 B1**
(45) Veröffentlichungstag und Bekanntmachung des Hinweises auf die Patenterteilung: **30.03.2016**
(21) Anmeldenummer: 11779113.7
(22) Anmeldetag: 07.10.2011
(51) Int. Cl.: H01F 38/30

(54) **VORRICHTUNG ZUR LÖSBAREN BEFESTIGUNG EINES STROMLEITERS AN EINEM STROMWANDLERGEHÄUSE**
DEVICE FOR REMOVABLY FIXING A CURRENT CONDUCTOR TO A CURRENT TRANSFORMER HOUSING
DISPOSITIF POUR FIXER DE MANIÈRE AMOVIBLE UN CONDUCTEUR DE COURANT À UN BOÎTIER DE TRANSFORMATEUR DE COURANT

(30) Priorität: 07.10.2010 DE 202010008750 U; 07.10.2010 DE 102010038042
(43) Veröffentlichungstag der Anmeldung: 14.08.2013
(73) Patentinhaber: Phoenix Contact GmbH & Co. KG, 32825 Blomberg (DE)
(72) Erfinder: LEIFER, Christoph, 33014 Bad Driburg (DE); THÖRNER, Carsten, 49324 Melle (DE); DAT-MINH, Trinh, 32683 Barntrup (DE)
(74) Vertreter: Michalski Hüttermann & Partner Patentanwälte mbB
(86) Internationale Anmeldenummer: PCT/EP2011/067611
(87) Internationale Veröffentlichungsnummer: WO 2012/045885

(56) Entgegenhaltungen:
- EP-A2- 1 217 230
- DE-A1- 19 733 852
- DE-C1- 19 833 150
- JP-A- 57 192 014
- US-A1- 2007 285 201

## Beschreibung

Die Erfindung betrifft eine Vorrichtung zur lösbaren Befestigung eines Stromleiters an einem Stromwandlergehäuse, mit dem Stromwandlergehäuse, einem durch das Stromwandlergehäuse hindurchgeführten Halteelement, einem durch das Halteelement hindurchgeführten Befestigungselement und einem Klemmelement.

Aus dem Stand der Technik ist bekannt, einen Stromleiter durch eine an einem Stromwandlergehäuse vorgesehene Öffnung zu führen, wobei die Befestigung des Stromleiters an dem Stromwandlergehäuse üblicherweise über zwei Schrauben oder Gewindestifte erfolgt, welche in zwei an dem Stromwandlergehäuse angeordneten Halteelementen geführt sind. Zur Befestigung werden die Schrauben bzw. die Gewindestifte innerhalb der Halteelemente durch eine rein rotatorische Bewegung in Richtung des Stromleiters gedreht bis sie mit ihrer Querschnittsfläche auf der Oberfläche des Stromleiters aufliegen. Durch ein weiteres Drehen der Schrauben bzw. der Gewindestifte erfolgt die Fixierung des Stromleiters in dem Stromwandlergehäuse.

Aus der DE 197 33 852 A1 ist Aufsteckstromwandler bekannt, dessen Primärschienenklemme mit dem Wandler eine unverlierbare, jedoch trennbare Einheit bildet.

Aus der DE 198 33 150 C1 ist eine Anschlußklemme mit einem U-förmigen Klemmrahmen bekannt, in den ein elektrischer Leiter eingelegt werden kann, und mit einer in den Klemmrahmen einbringbaren Schraubeinheit zur klemmenden Befestigung- des elektrischen Leiters.

Aus der EP 1 217 230 A2 ist eine Schnellbefestigungsmutter bekannt, die eine Öffnung mit von einem Tragteil ausgestellten Rastklinken aufweist. Beim Einschieben eines Gewindeschaftes weichen diese elastisch aus und verklemmten sich bei einer entgegengesetzten zugbelastung des Gewindeschaftes gegen dessen Gewindegänge.

Nachteilig hierbei ist, dass die Gewindestifte bzw. die Schrauben einen relativ langen Weg zur Befestigung an dem Stromleiter zurücklegen müssen, wobei dies ausschließlich durch eine rein rotatorische Bewegung erfolgt, was sehr kraftaufwändig und zeitintensiv ist, insbesondere bei einer größeren Anzahl zu fixierender Stromwandlergehäuse an einem Stromleiter.

Die Erfindung liegt daher die Aufgabe zugrunde, eine Vorrichtung zur Befestigung eines Stromleiters an einem Stromwandlergehäuse anzugeben, welche sich durch eine einfachere und schnellere Montage auszeichnet.

Die Lösung der Aufgabe erfolgt erfindungsgemäß durch die Merkmale des unabhängigen Anspruchs. Vorteilhafte Ausgestaltungen der Erfindung sind in den Unteransprüchen angegeben.

Eine Lösung der zuvor genannten Aufgabe besteht somit in einer Vorrichtung zur lösbaren Befestigung eines Stromleiters an einem Stromwandlergehäuse, mit dem Stromwandlergehäuse, einem durch das Stromwandlergehäuse hindurchgeführten Halteelement, einem durch das Halteelement hindurchgeführten Befestigungselement und einem Klemmelement, wobei das Befestigungselement und/oder das Halteelement in einem befestigten Zustand des Stromleiters an dem Stromwandlergehäuse zumindest teilweise an der Oberfläche des Stromleiters anlegbar sind/ist, das Befestigungselement zum Befestigen bzw. Lösen von dem Stromleiter rotatorisch um seine Längsachse verdrehbar ist, und das Klemmelement derart an dem Stromwandlergehäuse beweglich angeordnet ist, dass das Klemmelement in einer ersten Position eine translatorische Verschiebung des Halteelements entlang seiner Längsachse zum Befestigen bzw. Lösen des Stromleiters ermöglicht und in einer zweiten Position die translatorische Verschiebung des Halteelements entlang seiner Längsachse zum Lösen des Stromleiters unterbindet.

Erfindungsgemäß ist also vorgesehen, dass der Stromleiter zum einen durch eine translatorische Bewegung des Halteelements und zum anderen durch eine rotatorische Bewegung des Befestigungselements an dem Stromleiter befestigbar ist, also durch zwei prinzipiell unabhängige Bewegungen des Halteelements bzw. des Befestigungselements. Da das Befestigungselement jedoch durch das Haltelement hindurchgeführt ist, verbringt eine translatorische Verschiebung des Halteelements auch das Befestigungselement translatorisch. Somit sind also das Halteelement und das Befestigungselement zur Befestigung des Stromleiters gegeneinander derart verbringbar, dass vorzugsweise das Halteelement zunächst eine rein translatorische Bewegung ausführt, bis dass das Halteelement auf die Oberfläche des Stromleiters auftrifft, und sodann eine endgültige Fixierung des Stromleiters durch eine rotatorische Bewegung des Befestigungselements, welches durch das Halteelement hindurchgeführt ist, erfolgt. Dabei wird bevorzugt zum einen das Halteelement durch eine an dem Stromwandlergehäuse ausgebildete Durchgangsöffnung hindurchgeführt und zum anderen das Befestigungselement durch eine an dem Halteelement ausgebildete Durchgangsöffnung hindurchgeführt. Im Ergebnis ermöglicht somit die erfindungsgemäße Vorrichtung eine besonders einfache und schnelle Befestigung eines Stromleiters an einem Stromwandlergehäuse. Dadurch, dass in einer bevorzugten Ausgestaltung mit der translatorischen Verschiebung des Halteelements hin zur Oberfläche des Stromleiters ein gegenüber der rotatorischen Bewegung des Befestigungselements um seine Längsachse größerer Weg pro Zeiteinheit zurücklegbar ist, bildet die erfindungsgemäße Vorrichtung eine sogenannte "Schnellbefestigungsvorrichtung" zur lösbaren Befestigung eines Stromleiters an einem Stromwandlergehäuse aus.

Das Befestigungselement und/oder das Halteelement sind vorzugsweise jeweils in Form eines länglichen stiftartigen Elements ausgebildet, welche jeweils zur Befestigung des Stromleiters in Richtung entlang seiner jeweiligen Längsachse bewegbar ist. Zur Befestigung des Stromleiters können das Befestigungselement und/oder das Halteelement in Richtung des Stromleiters bewegt werden und zum Lösen des Stromleiters können das Befestigungselement bzw. das Halteelement von dem Stromleiter weg bewegt werden, wobei das Befestigungselement bzw. das Halteelement vorzugsweise derart zum Stromleiter angeordnet sind bzw. zum Stromleiter geführt sind, dass die Längsachse des Befestigungselements bzw. des Halteelements im Wesentlichen quer zur Längsachse des Stromleiters angeordnet ist. In dem befestigten Zustand, bei welchem der Stromleiter an dem Stromwandlergehäuse fixiert ist, liegt das Befestigungselement und/oder das Halteelement vorzugsweise mit seiner jeweiligen Querschnittsfläche auf der Oberfläche des Stromleiters auf.

Zur Befestigung des Stromleiters an dem Stromwandlergehäuse wird vorzugsweise zunächst das Klemmelement in die erste Position verbracht, so dass eine translatorische Verschiebung des Halteelements entlang seiner Längsachse zum Befestigen des Stromleiters möglich ist. Sodann kann das Halteelement translatorisch in Richtung des Stromleiters bewegt werden, bis dass das Halteelement auf der Oberfläche des Stromleiters auftrifft oder in die Nähe des Stromleiters kommt. Vorzugsweise danach wird das Klemmelement von seiner ersten Position in die zweite Position verbracht, so dass die translatorische Verschiebung des Halteelements zum Lösen von dem Stromleiter unterbunden also unmöglich ist. Hierbei ist ferner bevorzugt, dass in der zweiten Position die translatorische Verschiebung des Halteelements entlang seiner Längsachse zum Lösen also auch zum Befestigen des Stromleiters unterbunden ist. Zur endgültigen Fixierung des Stromleiters an dem Stromwandlergehäuse kann sodann das in dem Halteelement geführte Befestigungselement rotatorisch um seine Längsachse verdreht werden, bis dass das Befestigungselement vorzugsweise mit seiner Querschnittsfläche auf der Oberfläche des Stromleiters auftrifft.

Die erfindungsgemäße Lösung zeichnet sich demzufolge dadurch aus, dass keine rein rotatorische Bewegung des Befestigungselements zum Befestigen eines Stromleiters an einem Stromwandlergehäuse mehr notwendig ist, sondern das Befestigungselement - geführt in dem Halteelement - zunächst in der ersten Position des Klemmelements translatorisch in Richtung des Stromleiters verbracht wird, und sodann nach einer Fixierung des Halteelements in dem Stromwandlergehäuse durch das Klemmelement in seiner zweiten Position rotatorisch in Richtung des Stromleiters verbracht wird. Dadurch ist es möglich, sowohl den Aufwand bei der Montage des Befestigungselements an dem Stromleiter als auch die dabei benötigte Zeit wesentlich zu reduzieren, so dass mit der erfindungsgemäßen Vorrichtung eine "Schnellbefestigung" eines Stromleiters an einem Stromwandlergehäuse möglich ist. Diese Schnellbefestigung kann dabei vorzugsweise erfolgen, ohne dass ein zusätzliches Werkzeug zur Befestigung notwendig wäre. Um eine gleichmäßige Befestigung zu erzielen, sind vorzugsweise an zwei sich gegenüberliegenden Seitenflächen des Stromwandlergehäuses vorzugsweise jeweils ein Halteelement mit einem darin angeordneten Befestigungselement vorgesehen, wobei ein jeweiliges Halteelement über ein jeweiliges Klemmelement an dem Stromwandlergehäuse fixierbar bzw. lösbar ist.

Grundsätzlich kann der Fachmann verschiedene Mittel vorsehen, um die translatorische Verschiebung des Halteelements zu ermöglichen bzw. zu unterbinden. Nach einer vorteilhaften Ausgestaltung der Erfindung ist jedoch bevorzugt, dass das Halteelement an einer Außenseitenfläche ein Rastmittel aufweist, das Klemmelement oder das Stromwandlergehäuse ein zu dem Rastmittel korrespondierendes Rastelement aufweist, in der ersten Position das Rastmittel aus dem Rastelement ausgerastet ist und in der zweiten Position das Rastmittel mit dem Rastelement verrastet ist. Das Rastmittel und/oder das Rastelement können als beliebige aus dem Stand der Technik bekannte Mittel zum Ausbilden einer Verrastung zwischen dem Halteelement und dem Klemmelement oder dem Stromwandlergehäuse ausgestaltet sein, also beispielsweise als ein Rasthaken oder eine Rastnase. Weiterhin ist bevorzugt, dass die übrigen Außenseitenfläche des Halteelements wenigstens teilweise eine glatte Oberfläche ausbilden, so dass das Halteelement in der ersten Position des Klemmelements in dem Stromwandlergehäuse translatorisch in einfacher Weise dadurch verschiebbar ist, dass zwischen den im Wesentlichen ebenen anderen Außenseitenflächen des Halteelements und zwischen dem Stromwandlergehäuse eine möglichst geringe Reibung entsteht.

In diesem Zusammenhang ist besonders bevorzugt, dass das Rastmittel und/oder das Rastelement derart ausgestaltet sind, dass das Halteelement in der zweiten Position des Klemmelements translatorisch entlang seiner Längsachse zum Befestigen des Stromleiters verschiebbar ist. Demnach ist also bevorzugt, dass in der zweiten Position des Klemmelements zwar die translatorische Verschiebung des Halteelements entlang seiner Längsachse zum Lösen des Stromleiters unterbunden ist, jedoch eine translatorische Verschiebung des Halteelements zum Befestigen des Stromleiters möglich ist. Eine derartige Ausgestaltung ist beispielsweise dadurch erreichbar, dass das Rastmittel und das Rastelement jeweils miteinander verrastbare Rasthaken bzw. Rastnasen aufweisen, die somit nur eine Verschiebung des Halteelements zum Befestigen des Stromleiters ermöglichen, nicht jedoch zum Lösen des Stromleiters. Durch eine derartige Ausgestaltung wird eine Schnellbefestigung derart ausgebildet, dass das Klemmelement mittels "Durchratschen" des Rastmittels gegenüber dem Rastelement zum Befestigen des Stromleiters translatorisch "schnellverschiebbar" ist.

Grundsätzlich kann das Klemmelement zum Erlauben bzw. Unterbinden der translatorischen Verschiebung des Halteelements beliebig ausgestaltet sein, beispielsweise als Kunststoffriegel. Gemäß einer bevorzugten Ausführungsform der Erfindung ist jedoch vorgesehen, dass das Klemmelement verschwenkbar an dem Stromwandlergehäuse angeordnet ist, die Schwenkachse des Klemmelements orthogonal zur Längsachse des Halteelements angeordnet ist, in der ersten Position ein Spalt zwischen dem Klemmelement und dem Halteelement ausgebildet ist, und in der zweiten Position das Klemmelement kontaktierend an dem Halteelement anliegt. Eine derartige Ausgestaltung hat den Vorteil, dass das Klemmelement besonders einfach, beispielsweise mit einem Werkzeug und/oder mit der Hand, von der ersten Position in die zweite Position verschwenkbar bzw. von der zweiten Position in die erste Position verschwenkbar ist, so dass das Halteelement in dem Stromwandlergehäuse translatorisch verschiebbar bzw. nicht verschiebbar ist. Dabei kann das Klemmelement beispielsweise eine Einrichtung zum Einführen eines Werkzeugs, mittels dessen das Klemmelement verschwenkbar ist, aufweisen. Ein derartiges Werkzeug kann dabei beispielsweise als ein Schraubendreher ausgeführt sein. Hinsichtlich dieser Ausführungsform ist nach einer weiteren Ausgestaltung der Erfindung besonders bevorzugt, dass das Klemmelement in der ersten Position und/oder in der zweiten Position mit dem Stromleitergehäuse verrastbar ist. Dies kann beispielsweise dadurch realisiert werden, dass das Klemmelement ein Rastmittel derart aufweist, welches beispielsweise in der ersten Position und/oder in der zweiten Position in einer korrespondierenden Öffnung in dem Stromleitergehäuse verrastet. Eine derartige Ausgestaltung hat den Vorteil, dass das Klemmelement nicht von der zweiten Position in die erste Position verschwenkt, ohne dass beispielsweise ein Bediener das Klemmelement mittels des Werkzeugs zwischen den Positionen verschwenkt, so dass der Stromleiter von dem Halteelement lösbar ist.

Nach einer alternativen bevorzugten Ausgestaltung der Erfindung ist das Klemmelement verschiebbar an dem Stromwandlergehäuse derart angeordnet, dass die Verschiebeachse des Klemmelements im Wesentlichen in einem Winkel von 45° zu der Längsachse des Halteelements angeordnet ist, wobei in der ersten Position ein Spalt zwischen dem Klemmelement und dem Halteelement ausgebildet ist und in der zweiten Position das Klemmelement kontaktierend an dem Halteelement anliegt. Nach dieser Ausführungsform ist also das Klemmelement derart an dem Stromwandlergehäuse verschiebbar angeordnet, dass das Klemmelement, beispielsweise betätigbar durch ein Werkzeug und/oder mit der Hand, von der ersten Position in die zweite Position, bzw. zurück, verschiebbar ist. Dabei ist das Klemmelement vorzugsweise derart ausgestaltet, dass das Klemmelement durch Betätigen des Werkzeugs in Richtung des Stromleiters von dem Halteelement lösbar ist, so dass das Halteelement in dem Stromwandlergehäuse translatorisch verschoben werden kann. Diese Ausgestaltung hat somit den Vorteil, dass das Klemmelement besonders einfach, beispielsweise durch einen Schraubenzieher und/oder durch Fingerdruck, betätigbar ist. In diesem Zusammenhang ist ferner gemäß einer weiteren Ausführungsform der Erfindung bevorzugt, dass der Winkel von im Wesentlichen 45° zwischen der Verschiebeachse des Klemmelements und der sich in Richtung des Stromleiters erstreckenden Längsachse des Halteelements ausgebildet ist. Dadurch wird erreicht, dass in der zweiten Position eine Bewegung des Halteelements weg vom Stromleiter, beispielsweise bewirkt durch eine rotatorische Bewegung des Befestigungselements hin zum Stromleiter, den Anpressdruck zwischen dem Klemmelement und dem Halteelement erhöht wird, was in einer verbesserten und selbsthemmenden Fixierung des Halteelements an dem Stromwandlergehäuse resultiert.

Ferner ist bevorzugt eine Feder, beispielsweise eine Metallfeder, derart vorgesehen, dass das Klemmelement mit Federkraft beaufschlagt ist, so dass das Klemmelement von der ersten Position in die zweite Position strebt. Mit einer derartigen Ausgestaltung kann beispielsweise das Klemmelement in einfacher Weise hin zum Stromleiter verschoben werden, wobei eine Rückbewegung des Halteelements weg von dem Stromleiter unterbunden wird.

Zur Ausbildung der rotatorischen Bewegung des Befestigungselements um seine Längsachse in dem Halteelement sind viele Möglichkeiten denkbar. Gemäß einer bevorzugten Ausführungsform der Erfindung ist das Befestigungselement als Schraube ausgeführt, wobei das Halteelement ein Gewinde aufweist und die Schraube zum Befestigen bzw. Lösen von dem Stromleiter rotatorisch in dem Gewinde verdrehbar ist. Ferner ist in diesem Zusammenhang bevorzugt, dass das Halteelement eine Aufnahme für das Gewinde derart aufweist, dass das Gewinde nicht translatorisch entlang der Längsachse des Halteelements in dem Halteelement verschiebbar ist. Ganz besonders bevorzugt ist die Aufnahme für das Gewinde derart ausgeführt, dass das Gewinde von einer Seitenfläche des Halteelements in das Halteelement einführbar ist. Das Gewinde ist vorzugsweise als Mutter, als Vierkantmutter, als Sechskantmutter und/oder als Einpressmutter ausgeführt.

Nach einer weiteren besonders bevorzugten Ausführungsform der Erfindung weist die Vorrichtung ein an dem Stromwandlergehäuse angeordnetes Aufnahmeelement auf, wobei das Halteelement durch das Aufnahmeelement hindurchgeführt ist, das Befestigungselement an dem Halteelement angeordnet ist und das Aufnahmeelement lösbar an dem Stromwandlergehäuse befestigt ist. Das Aufnahmeelement ist dabei vorzugsweise in Form eines Kunststoffhalters oder in Form eines Flansches ausgebildet, welcher an einer Seitenfläche des Stromwandlergehäuses angeordnet ist. Das Halteelement wird dabei vorzugsweise durch eine in dem Aufnahmeelement ausgebildete Durchgangsöffnung geführt. Eine derartige Ausgestaltung hat den großen Vorteil, dass ein bereits aus dem Stand der Technik bekanntes Stromwandlergehäuse "nachträglich" mit einem Aufnahmeelement nachrüstbar ist, wobei das Aufnahmeelement das Halteelement, das Befestigungselement und das Klemmelement aufweist. Entsprechend der vorab beschriebenen Ausführungsform ist bevorzugt, dass das Rastmittel an dem Aufnahmeelement angeordnet ist.

Nachfolgend wird die Erfindung unter Bezugnahme auf die Zeichnung anhand bevorzugter Ausführungsbeispiele näher erläutert.

In der Zeichnung zeigen:
- Fig. 1: eine Vorrichtung gemäß einem bevorzugten Ausführungsbeispiel der Erfindung in einer perspektivischen Ansicht,
- Fig. 2: ein Aufnahmeelement mit einem Halteelement, mit einem Befestigungselement und mit einem Klemmelement gemäß dem bevorzugten Ausführungsbeispiel der Erfindung in einer kombinierten Seit-/Schnittansicht,
- Fig. 3: eine Vorrichtung gemäß einem weiteren bevorzugten Ausführungsbeispiel der Erfindung in einer perspektivischen Ansicht, und
- Fig. 4: ein Aufnahmeelement mit einem Halteelement, mit einem Befestigungselement und mit einem Klemmelement gemäß dem weiteren bevorzugten Ausführungsbeispiel der Erfindung in einer kombinierten Seit-/Schnittansicht.

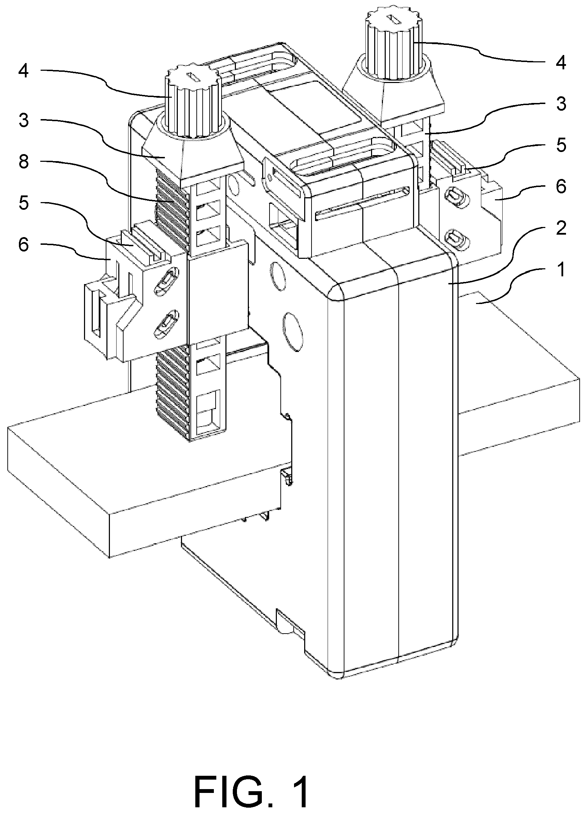

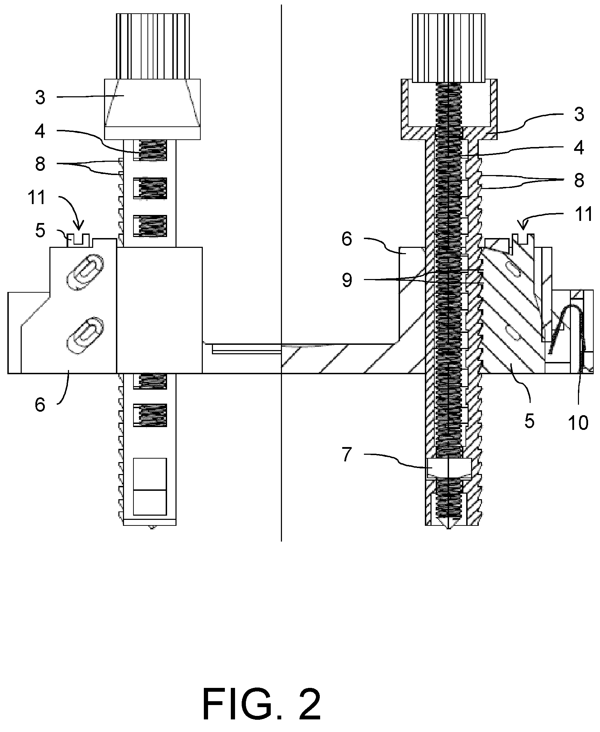

Aus Fig. 1 und Fig. 2 ist jeweils eine Vorrichtung gemäß einem ersten bevorzugten Ausführungsbeispiel der Erfindung in einer perspektivischen Ansicht ersichtlich. Die Vorrichtung zur lösbaren Befestigung eines Stromleiters 1 an einem Stromwandlergehäuse 2 weist das Stromwandlergehäuse 2, ein durch das Stromwandlergehäuse 2 hindurchgeführtes Halteelement 3, ein durch das Halteelement 3 hindurchgeführtes Befestigungselement 4 sowie ein Klemmelement 5 auf.

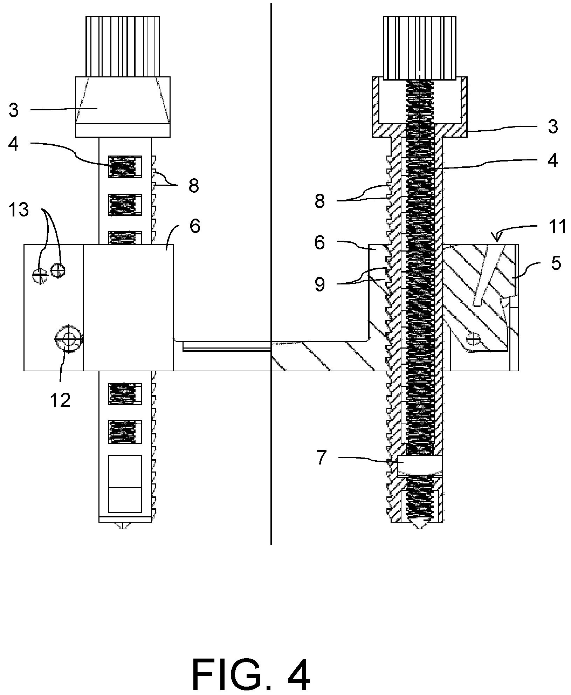

Wie aus Fig. 2 bzw. Fig. 4 ersichtlich, sind das Halteelement 3 und das Klemmelement 5 in einem Aufnahmeelement 6 angeordnet, wobei das Aufnahmeelement 6 lösbar an dem Stromwandlergehäuse 2 befestigt ist. Dazu weist das Aufnahmeelement 6 bzw. das Stromwandlergehäuse 2 eine Rasteinrichtung, nicht gezeigt, auf, wobei das Aufnahmeelement 6 jedoch auch ohne eine derartige Rasteinrichtung an dem Stromwandlergehäuse 2 fixierbar ist, wie nachfolgend ausgeführt.

Das Befestigungselement 4 ist eine Schraube mit einem umspritzten Kopf, welche zum Befestigen bzw. zum Lösen von dem Stromleiter 1 rotatorisch um seine Längsachse in einem als Mutter ausgeführten Gewinde 7 verdrehbar ist. Das als Schraube ausgeführte Befestigungselement 4 sowie die Mutter sind in dem Halteelement 3 derart angeordnet, dass das Halteelement 3, und somit auch das Befestigungselement 4, in dem Aufnahmeelement 6 bzw. somit auch in dem Stromwandlergehäuse 2, translatorisch entlang der Längsachse des Halteelements 3 hin zum Befestigen bzw. weg zum Lösen von dem Stromleiter 1 bewegbar ist. In einem befestigten Zustand des Stromleiters 1 liegen somit also das Befestigungselement 4 und/oder das Halteelement 3 zumindest teilweise an der Oberfläche des Stromleiters 1 auf.

Das Klemmelement 5 ist dabei derart an dem Aufnahmeelement 6 bzw. an dem Stromwandlergehäuse 2 beweglich angeordnet, dass das Klemmelement 6 in einer ersten Position die translatorische Verschiebung des Halteelements 3 entlang seiner Längsachse zum Befestigen bzw. Lösen des Stromleiters 1 ermöglicht. In einer zweiten Position des Klemmelements 5 wird dagegen die translatorische Verschiebung des Halteelements 3 entlang seiner Längsachse zum Lösen des Stromleiters 1 durch das Klemmelement 5 unterbunden.

Dazu weist gemäß der ersten in Fig. 1 und Fig. 2 gezeigten Ausgestaltung das Halteelement 3 an einer Außenseitenfläche ein Rastmittel 8 auf, welches vorliegend als Rastnase ausgeführt ist. Das Klemmelement 5 weist ferner ein zu dem Rastmittel 8 korrespondierendes Rastelement 9 auf, welches als Rasthaken ausgeführt ist. In der ersten Position, welche in Fig. 2 gezeigt ist, greift das Rastmittel 8 in das korrespondierende Rastelement 9 ein, so dass die translatorische Verschiebung des Halteelements 3 zum Lösen des Stromleiters 1 unterbunden ist. Gleichwohl ist es jedoch möglich, das Halteelement 3 hin zum Stromleiter 1 zu verschieben, dadurch, dass das Rastmittel 8 durch das Rastelement 9 "hindurchrastet".

Gemäß Fig. 1 und 2 ist das Klemmelement 5 verschiebbar an dem Aufnahmeelement 6 bzw. an dem Stromwandlergehäuse 2 derart angeordnet, dass die Verschiebeachse des Klemmelements 5 in einem Winkel von 45° zu der Längsachse des Halteelements 3 angeordnet ist. Ferner ist eine Feder 10 vorgesehen, die das Klemmelement 5 derart mit Federkraft beaufschlagt, dass das Klemmelement 5 von der ersten Position in die zweite Position strebt. In der ersten Position, nicht dargestellt, verrastet das Rastmittel 8 nicht mit dem Rastelement 9, so dass das Halteelement 3 frei entlang seiner Längsachse zum Befestigen oder Lösen des Stromleiters 1 translatorisch verschiebbar ist. Zum Verbringen des Klemmelements 5 von der zweiten Position in die erste Position ist eine Aufnahme 11 vorgesehen, welche beispielsweise durch einen Schraubendreher oder per Hand bzw. durch einen Finger betätigbar ist.

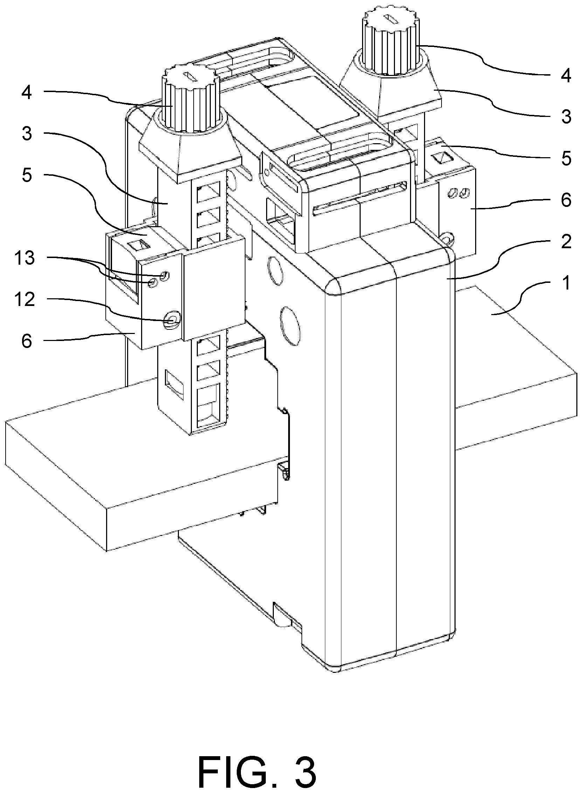

Nach einer weiteren Ausgestaltung der Erfindung, dargestellt in Fig. 3 und Fig. 4, ist das Klemmelement 5 verschwenkbar an dem Aufnahmeelement 6 bzw. an dem Stromwandlergehäuse 2 derart angeordnet, dass die Schwenkachse 12 orthogonal zur Längsachse des Halteelements 3 angeordnet ist. Dabei ist das Klemmelement 5 derart verschwenkbar, dass in der ersten Position ein Spalt zwischen dem Klemmelement 5 und dem Halteelement 3 ausgebildet ist, so dass das Halteelement 3 entlang seiner Längsachse translatorisch frei verschiebbar in dem Aufnahmeelement 6 bzw. in dem Stromwandlergehäuse 2 ist. In der zweiten Position des Klemmelements 5 liegt, wie in Fig. 4 gezeigt, das Klemmelement 5 dagegen kontaktierend an dem Halteelement 3 an, so dass das Halteelement 3 translatorisch entlang seiner Längsachse unverschiebbar fixiert ist. Gemäß dieser Ausführungsform der Erfindung ist das Rastelement 9 an dem Aufnahmeelement 6 bzw. an dem Stromwandlergehäuse 2 angeordnet.

Das Klemmelement 6 weist ferner Mittel zum Verrasten mit dem Aufnahmeelement 6 bzw. mit dem Stromwandlergehäuse 2 auf, welche vorliegend als Rastmittel, die in entsprechende Öffnungen 13 des Aufnahmeelements 6 bzw. des Stromwandlergehäuses 2 eingreifen, ausgeführt sind, eingreifen. Das Klemmelement 5 weist in dieser Ausgestaltung ebenfalls eine Aufnahme 11 auf, in welche ein Werkzeug einführbar ist, wobei mittels des Werkzeugs das Klemmelement 5 von der ersten Position in die zweite Position bzw. umgekehrt zum Fixieren bzw. Lösen des Halteelements 3 verschwenkbar ist.

**Bezugszeichenliste**

| | |
|---|---|
| Stromleiter | 1 |
| Stromwandlergehäuse | 2 |
| Halteelement | 3 |
| Befestigungselement | 4 |
| Klemmelement | 5 |
| Aufnahmeelement | 6 |
| Gewinde | 7 |
| Rastmittel | 8 |
| Rastelement | 9 |
| Feder | 10 |
| Aufnahme | 11 |
| Schwenkachse | 12 |
| Öffnung | 13 |

## Patentansprüche

1. Vorrichtung zur lösbaren Befestigung eines Stromleiters (1) an einem Stromwandlergehäuse (2), mit dem Stramr,van.dlergehäuse (2), einem durch das Stromwandlergehäuse (2) hindurchgeführten Halteelement (3), einem durch das Halteelement (3) hindurchgeführten Befestigungselement (4) und einem Klemmelement (5), wobei
das Befestigungselement (4) und/oder das Halteelement (3) in einem befestigten Zustand des Stromleiters (1) an dem Stromwandlergehäuse (2) zumindest teilweise an der Oberfläche des Stromleiters (1) anlegbar sind/ist,
das Befestigungselement (4) zum Befestigen bzw. Lösen von dem Stromleiter (1) rotatorisch um seine Längsachse verdrehbar ist, und
das Klemmelement (5) derart an dem Stromwandlergehäuse (2) beweglich angeordnet und ausgestaltet ist, dass das Klemmelement (5) in einer ersten Position eine translatorische Verschiebung des Halteelements (3) entlang seiner Längsachse zum Befestigen bzw. Lösen des Stromleiters (1) ermöglicht und in einer zweiten Position die translatorische Verschiebung des Halteelements (3) entlang seiner Längsachse zum Lösen des Stromleiters (1) unterbindet.

2. Vorrichtung nach dem vorhergehenden Anspruch, wobei das Halteelement (3) an einer Außenseitenfläche ein Rastmittel (8) aufweist, das Klemmelement (5) oder das Stromwandlergehäuse (2) ein zu dem Rastmittel (8) korrespondierendes Rastelement (9) aufweist, in der ersten Position das Rastmittel (8) aus dem Rastelement (9) ausgerastet ist und in der zweiten Position das Rastmittel (8) mit dem Rastelement (9) verrastet ist.

3. Vorrichtung nach dem vorhergehenden Anspruch, wobei das Rastmittel (8) und/oder das Rastelement (9) derart ausgestaltet sind, dass das Halteelement (3) in der zweiten Position des Klemmelements (5) translatorisch entlang seiner Längsachse zum Befestigen des Stromleiter (1) verschiebbar ist.

4. Vorrichtung nach einem der vorhergehenden Ansprüche, wobei das Klemmelement (5) verschwenkbar an dem Stromwandlergehäuse (2) angeordnet ist, die Schwenkachse des Klemmelements (5) orthogonal zur Längsachse des Halteelements (3) angeordnet ist, in der ersten Position ein Spalt zwischen dem Klemmelement (5) und dem Halteelement (3) ausgebildet ist und in der zweiten Position das Klemmelement (5) kontaktierend an dem Halteelement (3) anliegt.

5. Vorrichtung nach dem vorhergehenden Anspruch, wobei das Klemmelement (5) in der ersten Position und/oder in der zweiten Position mit dem Stromwandlergehäuse (2) verrastbar ist.

6. Vorrichtung nach einem der Ansprüche 1 bis 3, wobei das Klemmelement (5) verschiebbar an dem Stromwandlergehäuse (2) angeordnet ist, die Verschiebeachse des Klemmelements (5) im Wesentlichen in einen Winkel von 45° zu der Längsachse des Halteelements (3) angeordnet ist, in der ersten Position ein Spalt zwischen dem Klemmelement (5) und dem Halteelement (3) ausgebildet ist und in der zweiten Position das Klemmelement (5) kontaktierend an dem Halteelement (3) anliegt.

7. Vorrichtung nach dem vorhergehenden Anspruch, wobei der Winkel von im Wesentlichen 45° zwischen der Verschiebeachse des Klemmelements (5) und der sich in Richtung des Stromleiters (1) erstreckenden Längsachse des Halteelements (3) ausgebildet ist.

8. Vorrichtung nach Anspruch 6 oder 7, mit einer Feder (10), wobei das Klemmelement (5) derart mit Federkraft der Feder (10) beaufschlagt ist, dass das Klemmelement (5) von der ersten Position in die zweite Position strebt.

9. Vorrichtung nach einem der vorhergehenden Ansprüche, wobei das Befestigungselement (4) als Schraube ausgeführt ist, das Halteelement (3) ein Gewinde (7) aufweist und die Schraube zum Befestigen bzw. Lösen von dem Stromleiter (1) rotatorisch in dem Gewinde (7) verdrehbar ist.

10. Vorrichtung nach einem der vorhergehenden Ansprüche, mit einem an dem Stromwandlergehäuse (2) angeordneten Aufnahmeelement (6), wobei das Halteelement (3) durch das Aufnahmeelement (6) hindurchgeführt ist, das Klemmelement (5) an dem Halteelement (6) angeordnet ist und das Aufnahmeelement (5) lösbar an dem Stromwandlergehäuse (2) befestigt ist.

## Claims

1. A device for detachably fastening a current conductor (1) to a current transformer housing (2), comprising the current transformer housing (2), a retaining element (3) that is guided through the current transformer housing (2), a fastening element (4) that is guided through the retaining element (3), and a clamping element (5), wherein
the fastening element (4) and/or the retaining element (3) are seatable against at least some regions of the surface of the current conductor (1) when the current conductor (1) is fastened to the current transformer housing (2),
the fastening element (4) can be rotated in a rotatory manner about the longitudinal axis thereof so as to fasten or detach the current conductor (1), and
the clamping element (5) is movably arranged on the current transformer housing (2) so that, in a first position, the clamping element (5) allows a translatory displacement of the retaining element (3) along the longitudinal axis thereof so as to fasten or detach the current conductor (1) and, in a second position, prevents the translatory displacement of the retaining element (3) along the longitudinal axis thereof so as to detach the current conductor (1).

2. The device according to the preceding claim, wherein an outer lateral face of the retaining element (3) comprises a detent means (8), and the clamping element (5) or the current transformer housing (2) comprises a detent element (9) that corresponds to the detent means (8), with the detent means (8) being disengaged from the detent element (9) in the first position, and the detent means (8) being latchingly engaged with the detent element (9) in the second position.

3. The device according to the preceding claims, wherein the detent means (8) and/or the detent element (9) are designed such that, in the second position of the clamping element (5), the retaining element (3) can be displaced in a translatory manner along the longitudinal axis thereof so as to fasten the current conductor (1).

4. A device according to any one of the preceding claims, wherein the clamping element (5) is pivotably arranged on the current transformer housing (2), the pivot axis of the clamping element (5) is perpendicular to the longitudinal axis of the retaining element (3), a gap is formed between the clamping element (5) and the retaining element (3) in the first position, and the clamping element (5) is seated with contact against the retaining element (3) in the second position.

5. The device according to the preceding claim, wherein the clamping element (5) can be latchingly engaged with the current transformer housing (2) in the first position and/or in the second position.

6. A device according to any one of claims 1 to 3, wherein the clamping element (5) is displaceably arranged on the current transformer housing (2), the axis of displacement of the clamping element (5) is arranged essentially at an angle of 45º relative to the longitudinal axis of the retaining element (3), a gap is formed between the clamping element (5) and the retaining element (3) in the first position, and the clamping element (5) is seated with contact against the retaining element (3) in the second position.

7. The device according to the preceding claim, wherein the angle of essentially 45º is formed between the axis of displacement of the clamping element (5) and the longitudinal axis of the retaining element (3) extending in the direction of the current conductor (1).

8. The device according to claim 6 or 7, comprising a spring (10), wherein a spring force of the spring (10) acts on the clamping element (5) so that the clamping element (5) strives to move from the first position to the second position.

9. A device according to any one of the preceding claims, wherein the fastening element (4) is designed as a screw, the retaining element (3) comprises a thread (7), and the screw can be rotated in the thread (7) in a rotatory manner so as to fasten or detach the current conductor (1).

10. A device according to any one of the preceding claims, comprising a receiving element (6) that is arranged on the current transformer housing (2), wherein the retaining element (3) is guided through the receiving element (6), the clamping element (5) is arranged on the retaining element (6), and the receiving element (5) is detachably fastened to the current transformer housing (2).

## Revendications

1. Dispositif pour fixer de manière amovible un conducteur de courant (1) à un boitier de transformateur de courant (2), avec un boitier de transformateur de courant (2), un élément de retenue (3) passant à travers le boitier de transformateur de courant (2), un élément de fixation (4) passant à travers l'élément de retenue (3), et un élément de serrage (5), où
l'élément de fixation (4) et/ou l'élément de retenue (3), dans un état fixé du conducteur de courant (1) sur le boitier de transformateur de courant (2), peut(peuvent) être appliqué(s) au moins en partie sur la surface du conducteur de courant (1),
l'élément de fixation (4) peut être mis en rotation autour de son axe longitudinal pour la fixation, respectivement, le détachement, du conducteur de courant (1),
L'élément de serrage (5) est disposé mobile sur le boitier de transformateur de courant (2) et est conçu de telle manière que, dans une première position, l'élément de serrage (5) permet un déplacement translatoire de l'élément de retenue (3) le long de son axe longitudinal pour la fixation, respectivement, le détachement, du conducteur de courant (1), et dans une deuxième position, empêche le déplacement translatoire de l'élément de retenue (3) le long de son axe longitudinal pour le détachement du conducteur de courant (1).

2. Dispositif selon la revendication précédente, où l'élément de retenue (3) présente un moyen d'encliquetage (8) sur une surface latérale externe, l'élément de serrage (5) ou le boitier de transformateur de courant (2) présentent un élément d'encliquetage (9) correspondant au moyen d'encliquetage (8), dans la première position, le moyen d'encliquetage (8) est décliqueté de l'élément d'encliquetage (9) et dans la deuxième position, le moyen d'encliquetage (8) est enclenché avec l'élément d'encliquetage (9).

3. Dispositif selon la revendication précédente, où le moyen d'encliquetage (8) et/ou l'élément d'encliquetage (9) sont conçus de telle manière que l'élément de retenue (3) peut être déplacé de manière translatoire le long de son axe longitudinal dans la deuxième position de l'élément de serrage (5) pour la fixation du conducteur de courant (1).

4. Dispositif selon l'une des revendications précédentes, où l'élément de serrage (5) est disposé en pouvant pivoter sur le boitier de transformateur de courant (2), l'axe de pivotement de l'élément de serrage (5) est disposé de façon orthogonale par rapport à l'axe longitudinal de l'élément de retenue (3), dans la première position, une fente entre l'élément de serrage (5) et l'élément de retenue (3) est formée et dans la deuxième position, l'élément de serrage (5) est plaqué contre l'élément de retenue (3) en étant en contact.

5. Dispositif selon la revendication précédente, où l'élément de serrage (5) peut être encliqueté avec le boitier de transformateur de courant (2) dans la première position et/ou dans la deuxième position.

6. Dispositif selon l'une des revendications 1 à 3, où l'élément de serrage (5) est disposé en pouvant coulisser sur le boitier de transformateur de courant (2), l'axe de coulissement de l'élément de serrage (5) est disposé à un angle de 45 ° par rapport à l'axe longitudinal de l'élément de retenue (3), une fente entre l'élément de serrage (5) et l'élément de retenue (3) est formée dans la première position, et l'élément de serrage (5) est plaqué contre l'élément de retenue (3) en étant en contact dans la deuxième position.

7. Dispositif selon la revendication précédente, où l'angle dans l'ensemble de 45 ° entre l'axe de coulissement de l'élément de serrage (5) et l'axe longitudinal de l'élément de retenue (3) s'étendant dans la direction du conducteur de courant (1) est formé.

8. Dispositif selon les revendications 6 ou 7, avec un ressort (10), où l'élément de serrage (5) est soumis à une force élastique du ressort (10) de telle manière que l'élément de serrage (5) se dirige de la première position vers la deuxième position.

9. Dispositif selon l'une des revendications précédentes, où l'élément de fixation (4) est conçu sous la forme d'une vis, l'élément de retenue (3) présente un filetage (7) et la vis peut être mise en rotation dans le filetage (7) pour la fixation, respectivement le détachement, du conducteur de courant (1).

10. Dispositif selon l'une des revendications précédentes, avec un élément récepteur (6) disposé sur le boitier de transformateur de courant (2), où l'élément de retenue (3) passe à travers l'élément récepteur (6), l'élément de serrage (5) est disposé sur l'élément de retenue (6) et l'élément récepteur (5) est fixé de manière amovible sur le boitier de transformateur de courant (2).
